# EUROPEAN PATENT SPECIFICATION

(11) **EP 3 774 252 B1**
(45) Date of publication and mention of the grant of the patent: **12.01.2022**
(21) Application number: 19715957.7
(22) Date of filing: 11.04.2019
(51) Int. Cl.: B29C 33/00, B29C 70/48, B29C 67/24, B29C 45/17, B29C 45/27, B29C 45/28, B29C 45/26

(54) **IMPROVED APPARATUS FOR REACTION AND INJECTION MOLDING**
VERBESSERTE VORRICHTUNG FÜR REAKTIONS- UND SPRITZGIESSEN
APPAREIL AMÉLIORÉ POUR MOULAGE PAR RÉACTION ET INJECTION

(30) Priority: 13.04.2018 IT 201800004502
(43) Date of publication of application: 17.02.2021
(73) Proprietor: Cannon Tipos S.r.l., 21042 Caronno Pertusella (VA) (IT)
(72) Inventor: VOLPATO, Marco, 21042 Caronno Pertusella (VA) (IT); CASTELNOVO, Andrea, 21042 Caronno Pertusella (VA) (IT)
(74) Representative: Botti, Mario
(86) International application number: PCT/EP2019/059313
(87) International publication number: WO 2019/197557

(56) References cited:
- EP-A1- 0 000 886
- JP-A- S5 985 727
- JP-A- S60 120 023
- US-A- 3 674 398
- US-A- 4 129 636

## Description

### Technical field

The present invention refers to an improved apparatus for reaction and injection molding comprising at least one high pressure mixing and dosing head of thermosetting material and a mold, said mold having:
- at least one adduction portion to be coupled with an operative end of the mixing and dosing head,
- at least one feeding and distribution channel and at least one forming area in fluid communication with each other and with the adduction portion.

Such apparatus has been developed to optimize production times in industrial processes for reaction and injection molding, as well as for a related highly-efficient industrial process.

The invention refers, in particular, to an apparatus that allows to eliminate idle time due to waiting for the end of the reaction times of the material in a system that adopts an injection technology with highpressure mixing and dosing.

The invention also refers to industrial processes of the HPRTM (High Pressure Resin Transfer Moulding) type in which production times are optimized.

### Background art

As is known in this specific technical field, in reaction molding processes with expanding resins, reagent resins are dosed in a stoichiometric ratio in connection with a mixing device, commonly referred to as mixing and dosing head. In the mixing head, resins are intimately mixed as a result of mechanical agitation obtained by means of rotating mixers or as a result of high turbulence generated by jets of the resins that crash in an area of limited dimensions commonly referred to as mixing chamber. After mixing the mixed resins are still in a liquid state and, while the chemical reaction thereof starts, they are released or injected as a result of the pressure existing in the mixing chamber, in the molding cavity where they are intended to be.

If, when reacting, the resin forms foam and expands, the mixing head releases a certain quantity of material that, once expanded, saturates the inner volume of the mold, expanding, for example, thirty times with respect to the volume of the liquid, and making manufactured products with said characteristics. Once the resins have been poured in the mold in the reaction phase, the mixing and dosing head can be removed, while the expansion and the solidification of the material inside the mold occurs.

The mixing and dosing head is moved towards a different mold, repeating the same process, and so on, thus obtaining a production in parallel.

Such process, which guarantees an advantage due to the use of more than one mold simultaneously, adopting a unique mixing and dosing head, can be actuated only with molds that are open during the casting phase or closed but whose injection holes are positioned on the head of the fluid introduced and, in any case, only when the introduction of the reagent resin occurs at atmospheric pressure and the expansion and solidification reaction of the material is relatively slow.

In fact, if the manufacture is formed by casting in a volume of the mold at atmospheric pressure or by injection in a cavity at atmospheric pressure, the mixing head can be removed without particular problems and can be substituted by a non-hermetic closing device of the injection hole and without mechanical peculiarities. For example, a silicone cap activated by an air piston is enough.

US 3,674,398 A discloses an injection-molding machine with a mold cavity provided with an access opening for the admission of a combination of interacting components from a mixing chamber. A source of compressed air is connected to the mixing chamber via an inlet valve which is opened when the delivery of components to the mixing chamber is stopped: another valve unit at the end of the supply conduit then cuts off the access opening, after a delay sufficient to allow for the discharge of residual material from the mixing chamber into the cavity, and connects that conduit with an exhaust line directing the flow of scavenging air into the atmosphere.

EP 0 000 886 A1 discloses a process for the production in plastic materials, based on reaction of at least two components in a mixing chamber, this mixing chamber being closed before the start of the introduction of the reaction components and is automatically opened by the pressure which accumulates in it during the reaction at a predetermined pressure value.

JP S60 120023 A discloses an injection molding method with an injection adjustment through a directional control valve.

JP S59 85727 A discloses a metal mold in which a liquid obtained by mixing two or reactive components bv means of an insertion hole and a groove along a guide is introduced, a locking rod being tightly inserted in this groove and movable bv means of a piston mechanism, to facilitate cleaning for driving forward and backing the rod before and after the injection.

US 4,129,636 A discloses a process is provided for introducing mixed foamable reactants into a mixing chamber through injection apertures in its side wall portion. Prior to introducing the reactants into the mixing chamber, a displacement piston having a smaller cross-section than the mixing chamber is inserted into the outlet aperture of the mixing chamber so that the injection apertures communicate with the mold cavity bv means of a generally annular passage.

Nevertheless, a process of this type cannot be applied when the cavity of the mold must be kept at lower or particularly higher pressures than the atmospheric pressure.

For example, if the vacuum must be practiced in the mold before injection, or if the injection is made with a pre-determined pressure and particularly with a high gradient of pressure to make the resins slide within stratified fibers, or still if the cavity, even if filled, must be kept under pressure until the solidification of the resins, it is not conceivable to operate the removal of the mixing head unless the cavity is kept in said conditions to obtain components that require high quality.

In the technical field of reaction molding, HPRTM processes are also known that are different from the processes with expanding resins and that are used on the basis of the characteristics of the piece to obtain.

According to the HPRTM technique, processes have been developed that operate to duly use the characteristics of compact thermosetting resins, coupled with the injection under high pressure conditions.

The HPRTM processes have recently been developed in the automotive sector, mainly to make components of the structural and aesthetic highest quality in a composite material, for example carbon fiber, basically to lighten the weight of the supporting structure of automobiles or of the component parts thereof considering the pressing need to reduce fossil fuels consumption and the necessity to build electric propulsion cars.

This technology allows to produce in a relatively short time thousands of pieces with the same dimensions and characteristics and by means of a repeatable and quick industrial process.

A HPRTM process provides for the operation with virgin or recycled, not pre-impregnated, fiber layers, with an affordable basic and provision cost and with impregnation and polymerization times of the order of some hundreds of seconds.

The HPRTM process also provides for the mixing of the reactive resins by means of a high pressure mixing head where the mixing of the resins is obtained thanks to the high turbulence generated by the impingement of jets produced by high pressure and to the injection of the reagent compound in the cavity of the mold in an almost barycenter position or anyway in a proper position for being able to impregnate all the fiber contained therein.

The injection operation lasts from a few seconds to some tenths of seconds and the reagent resin spreads from the injection point through all the fiber until it arrives to the most peripheral spread end areas.

While the reagent resin has impregnated the fiber and is filling the cavity and the recesses, the pressure within the cavity of the mold increases in correspondence of the injection point and in the first spread area on account of the resistance to sliding that the resin encounters while it spreads through the fibers. When the reagent resin has filled the whole cavity, an abrupt increase in pressure in the cavity occurs and this peak of pressure is limited by the closure of the mixing head.

The increase in pressure in the whole cavity and the peak of pressure serve to compact the reagent resin and to collapse eventual small and residue air bubbles that can anyway be found in any accumulation peripheral area of the resin, although the vacuum is preliminarily practiced in the mold.

Normally, a pressure sensor, installed facing the cavity of the mold in proximity of the resin inlet area, detects the pressure of the reagent resin in the cavity of the mold and provides the signal for the closure of the mixing head in such a way as to stop the filling and to limit the peak of pressure to the desired values for compacting.

At the same time, the mold is kept at a temperature suitable for accelerating the reaction of the resin (for example, higher than 100°C) and, once the injection phase has been completed, the reagent resin injected quickly starts to polymerize until solidification and to form the mechanical characteristics of the piece to obtain.

The polymerization is also stimulated by the heat produced by the reaction of the resin itself, so that the polymerization necessary to the removal of the piece from the mold, the so-called de-molding, is obtained.

Even if advantageous under various aspects, and always more intended to be spread in the industrial field, the HPRTM process still has operative inconveniences; in particular it still requires a temporal optimization of the production process.

In particular, the traditional HPRTM process described above provides that, once the mixing and injection phase has been completed the supply of the reagent resin and has hermetically closed its own resin introduction duct, the head remains in position, locking the access hole to the cavity of the mold until the completion of the thermosetting of the material, since a detachment or the anticipated removal would imply serious damages due to the high pressures still at stake. In fact, it is not conceivable to separate the head, thus causing the release of the pressure without causing the immediate damage of the component to make.

This situation basically takes place with all thermosetting resins, and in particular with the following resins: polyurethane, epoxy, vinyl ester, polyamide, unsaturated polyester, phenolic resins, and with silicones.

It is possible to assert that during the polymerization and thermosetting phase of the material the mixing and dosing head remains substantially unused and that the inactivity time translates into a loss of productive capacity during the daily work cycle.

In this case, it would be desirable to be able to obviate this problem, guaranteeing the advantages of the prior art for reaction and injection molding for expanded materials and for resins in atmospheric pressure conditions, without incurring the respective problems. It would therefore be desirable to separate without problems the mixing and injection head from the mold also in the cases in which it is found in conditions of unsolidified resins and high internal pressure, and be able to position and use it on a different mold, as with the situation in the known technology of injection of materials introduced in cavity at atmospheric pressure.

The technical problem that is at the basis of the present invention is that of devising an apparatus and a relative industrial process for allowing a safe detachment of a high pressure and dosing mixing head applied to a reaction and injection molding system that requires to keep the cavity of the mold under pressure precisely at the end of the injection phase, said apparatus and said process having respective structural and functional characteristics such as to overcome the inconveniences that still limit the processes of the prior art.

Another aim of the present invention is to devise an apparatus and a relative industrial process that allows to increase the efficiency of the whole reaction and injection molding industrial process.

Another aim of the present invention is to devise a process that can be applied and actuated in industry with relatively low costs, though guaranteeing a very high efficiency in terms of quality for obtaining components obtained by molding in large series.

### Disclosure of invention

The idea of solution that is at the basis of the present invention is that of providing an apparatus capable of allowing decoupling the mixing and dosing head from the mold at the end of the injection phase, so that the mixing and dosing head can eventually be repositioned and used on at least one different mold in the course of the completion of the polymerization and formation of the component of the first mold.

On the basis of this idea of solution, the technical problem is solved by an improved apparatus for reaction and injection molding comprising at least one high pressure mixing and dosing head for thermosetting material and a mold, said mold having:
- at least one adduction portion to be coupled with an operating end of the mixing and dosing head,
- at least one feeding and distribution channel and at least one forming area in fluid communication with each other and with the adduction portion,
characterized by further comprising a shutter device that is active between said adduction portion and said feeding and distribution channel, or in said channel, to allow decoupling said mixing and dosing head from said adduction portion immediately at the end of the introduction phase of said thermosetting material under pressure.

The shutter device is a hollow cylinder having an end that is movably guided towards said adduction portion and inside which a depressor piston is movable.

Advantageously, the adduction portion comprises a coupling bush for connecting said operating end of the mixing and dosing head by means of a through-hole and a coaxial feeding bush receiving the end of said shutter device at an opposite end.

Further, the adduction portion of said feeding bush of reagent resin has a flared through-hole to be shape coupled with a bevel or conical end of the shutter device.

The distal end of said shutter device has a peripheral bevel and said end of said feeding bush of reagent resin has a corresponding inner surface of said flared through-hole with an inner-wall inclination in shape coupling with said peripheral bevel.

Further, the hollow cylinder of said shutter device houses a depressor piston that is movable along the cavities of the cylinder itself interlocked to a negative pressure actuator.

In a preferred embodiment the shutter device is made of a harder material than the material which said adduction portion is made of.

The invention also refers to a reaction and injection molding industrial process by means of an apparatus as the one described previously and characterized by the following phases:
- coupling the operating end of said high pressure mixing and dosing head with said adduction portion;
- introducing a thermosetting reagent resin into the mold until the injection phase has been completed;
- intercepting the fluid path between said adduction portion and said mold immediately at the end of the introduction of said mixture of thermosetting reagent resins by means of a shutter device;
- depressurization and backwash of residues of the mixture of thermosetting reagent resins by means of the same depressor device;
- removing said high pressure mixing and dosing head.

Advantageously, the interception and negative pressure phases are actuated by means of said shutter device comprising a hollow cylinder having an end that is movably guided towards said adduction portion and inside which a depressor piston is movable.

It should be noted that the introduction of the mixture of resins into said feeding channel is stopped and separated by a shape coupling between said shutter device and said adduction portion; in particular, the adduction portion is separated from the feeding and distribution channel, and said depressor piston is activated in sequence to create a suction negative pressure of residues of the thermosetting resins.

Further, the activation of the negative pressure phase can also occur slightly earlier than the interception and detachment phase of the fluid path between said adduction portion and said feeding and distribution channel.

The activation of the depressor to increase the volume can be activated both following the actual sealing of the adduction chamber detectable by means of a pressure switch installed on the control device or with a slight anticipation on the detected sealing position by means of a micro-switch or a proximity sensor installed on the cylinder that controls the movement of the shutter.

Further, the depressor is controlled in an extended or retracted position in the hollow cylinder by means of a hydraulic piston that moves a carriage provided with inclined grooves along which it engages by means of proper sliding pins or slides applied at the end thereof along the sides.

In a preferred embodiment coupling bush, inserting bush, shutter device and depressor piston are assembled in the respective seats using sliding gaskets and seals composed of materials adapted to resist to high temperatures, for example, Teflon or FKM-Viton gaskets that resist up to 200°C.

The features and advantages of the apparatus and the process according to the invention will become more fully apparent from the description below of an embodiment thereof, given as an illustrative but non-limiting example with reference to the annexed drawings.

### Brief description of drawings

- Figure 1 shows a schematic diagram in plan view of a portion of a mold having the molding imprint and made according to the present invention;

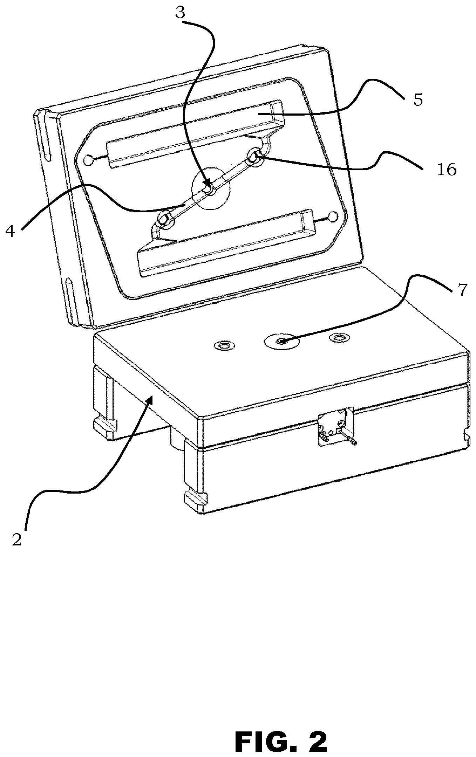

- figure 2 shows a perspective and schematic view of the mold comprising the imprint of figure 1;
- figure 3 shows a perspective view of a detail of an apparatus according to an embodiment of the present invention;
- figure 4 shows a section view of the details of figure 3 taken according to an orthogonal direction;
- figure 4A shows an enlarged scale view of the details of figure 4;
- figure 5 shows the apparatus of figure 3 in the introduction phase of the mixture of thermosetting reagent resins;

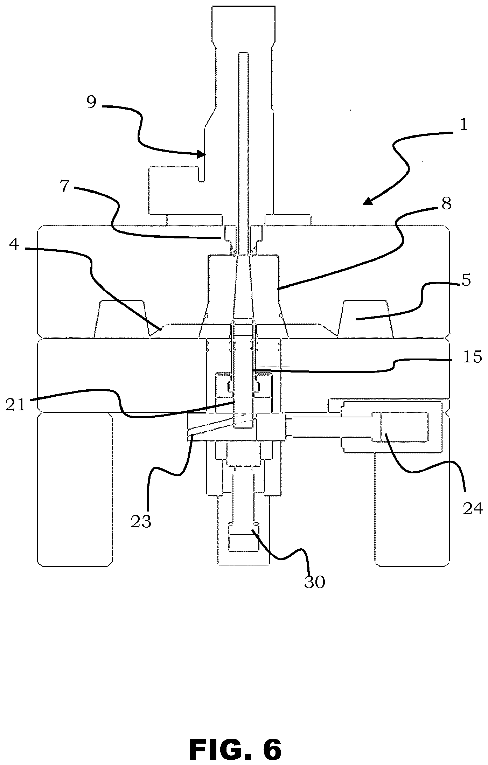

- figure 6 shows the apparatus of figure 3 in the condition in which a shutter is in sealing phase of the adduction duct;

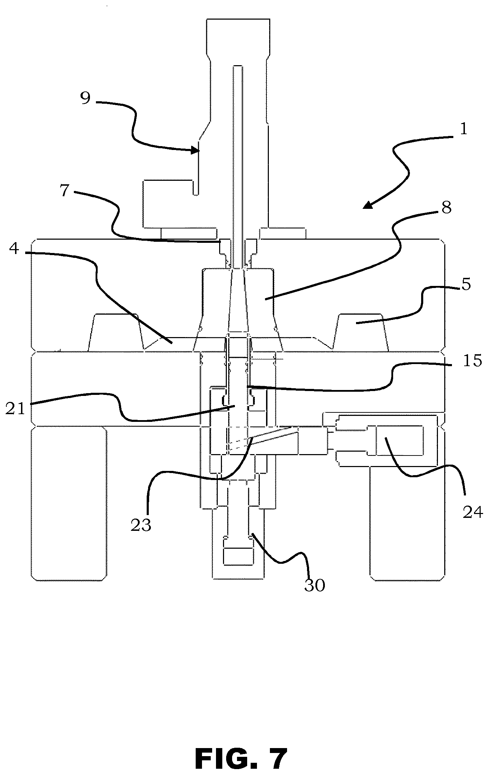

- figure 7 shows the apparatus of figure 3 in the activation phase of a depressor piston;

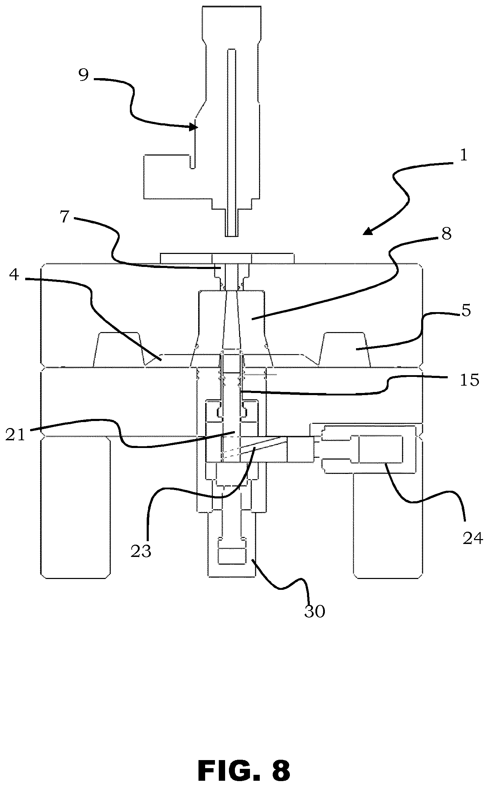

- figure 8 shows the apparatus of figure 3 in the detachment phase of the mixing and dosing head;
- figure 9 shows a schematic view in section of an alternative embodiment according to the present invention;
- figure 10 shows a further embodiment according to the present invention;
- figure 11 shows a further embodiment according to the present invention.

In the different figures, analogous elements will be identified with analogous reference numbers.

### Modes for carrying out the invention

With reference to such figures, with 1 is generally and schematically indicated a reaction and injection molding apparatus made according to the present invention for decoupling a high pressure mixing and dosing head 9 of reagent resins from a mold 2 in which the mixture of reagent resins is kept under pressure. This decoupling occurs according to the invention immediately after the completion of the introduction of the mixture of fluid reagent resins, that is, in order to optimize production process times.

The invention is particularly suitable when it is useful to adopt multiple molds for a manufacture in parallel, having a unique injection system available with mixing and dosing head under high pressure 9. The description that follows is made with particular reference to this embodiment with the aim of simplifying the presentation thereof.

The apparatus 1 is associated with a mold 2 structured with a pair of semi-shells that are closable with valves.

The mold 2 has at least one adduction and insertion portion 3 of the resin, at least one feeding and distribution channel or chamber 4 and at least one forming tank or area 5. The mixture of fluid reagent resins is made to advance to the adduction portion 3 by the mixing and dosing head 9 under high pressure and flows through the feeding and distribution channel 4 up to the inside of the forming area 5.

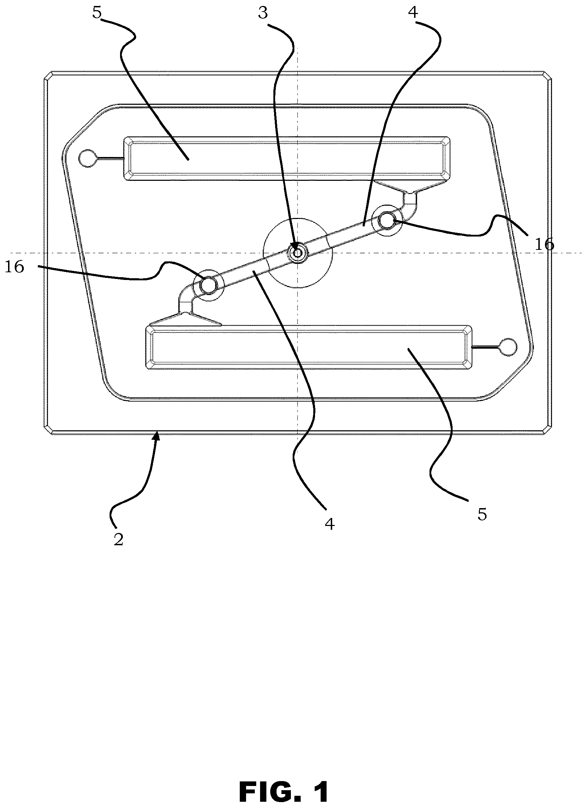

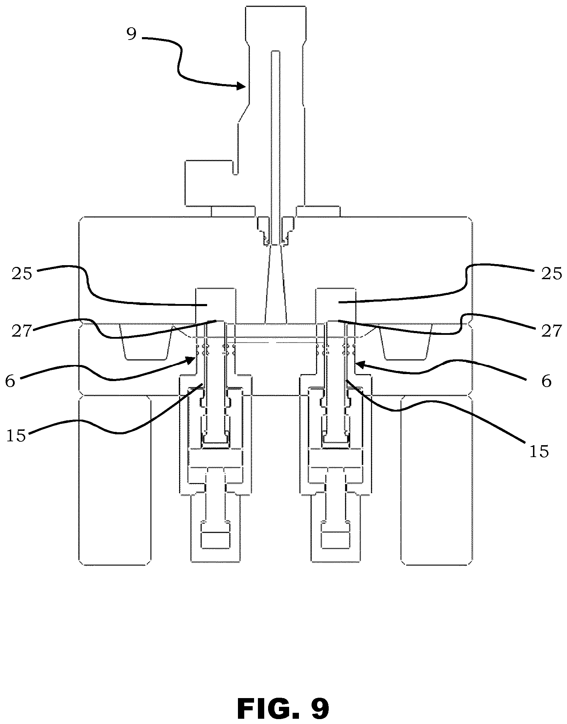

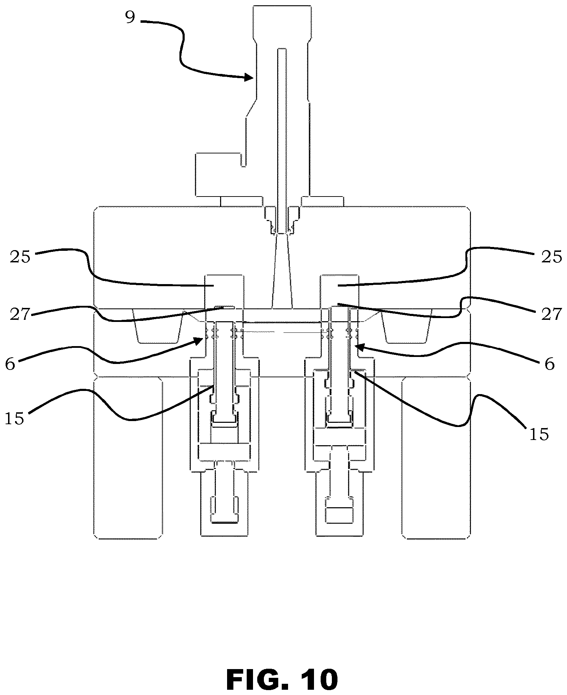

There can also be two or more feeding and distribution channels 4, in which case on them are provided housing holes 16, as can be seen in figure 1, of valve means 6 of casting selection, as can be seen in figures 9, 10 and 11.

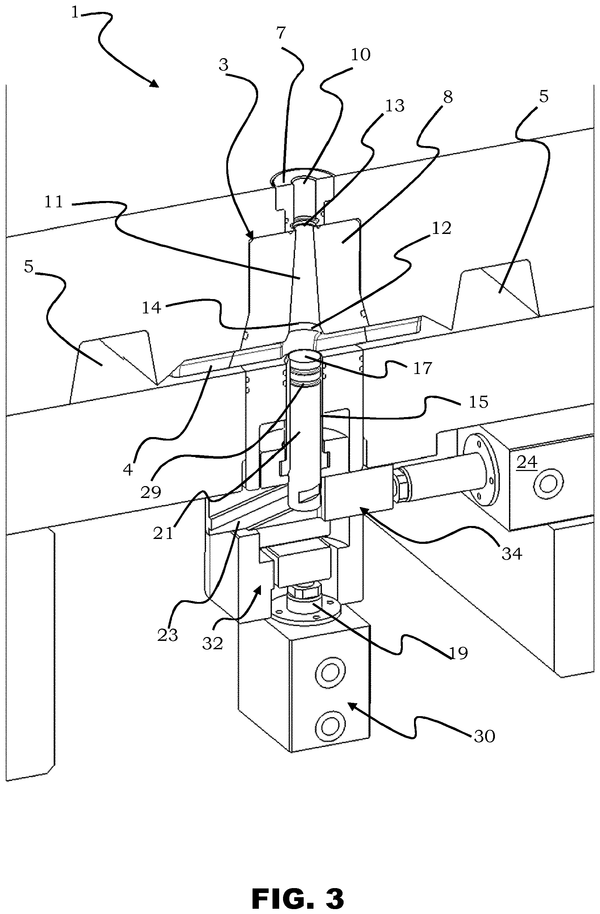

As can be seen in figure 3, the adduction portion 3 of the apparatus 1 comprises a coupling bush 7 for the mixing and dosing head under high pressure and a feeding bush 8. The feeding bush 8 is connected to the coupling bush 7 in correspondence of an inner end thereof 10 substantially seamlessly and in coaxial extension.

The coupling bush 7 is adapted to receive the operative end of the mixing and dosing head 9 under high pressure. The coupling bush 7, in the present illustrative and non-limiting embodiment, has a T-shaped longitudinal section with a central through-hole 10 of constant diameter.

The feeding bush 8 is placed between the coupling bush 7 and the feeding and distribution channel 4.

Nothing impedes, obviously, that the coupling bush 7 and the feeding bush 8 coincide in the same monolithic structure. In the preferred including but not limiting embodiment described here, the two bushes 7 and 8 have been hypothesized as structurally independent even if seamlessly coupled between them to form a unique introduction duct that flows into the feeding and distribution channel 4.

The feeding bush 8, in the non-limiting example described here, has a trunk-conical-shaped inner channel with a first trunk-conical portion 11 having base section in communication with the top section of a second trunk-conical portion 12 still more flared with respect to the previous one. This second portion 12 flows into the feeding and distribution channel 4.

The feeding bush 8 provides that the first trunk-conical portion 11 has a smaller diameter 13 that is in correspondence and coincides with the diameter of the through-hole 10 of the coupling bush 7, and a larger or base diameter 14 that is in correspondence of the second trunk-conical portion 12. Nothing would impede, however, that the inner channel of the feeding bush 8 is conformed according to a unique trunk-conical shape that puts the hole 10 in communication with the feeding and distribution channel 4.

The apparatus 1 comprises, further, a hollow cylinder shutter device 15 preferably arranged coaxially to the coupling bush 7 and transversally to the feeding and distribution channel 4.

The shutter device 15 is advantageously situated in proximity of the adduction portion 3, that is, of the coupling bush 7 and of the relative feeding bush 8 in such a way as to be able to interfere with the fluid path of the section of feeding duct formed by the holes 10, 11 and 12 facing the feeding and distribution channel 4.

The shutter device 15 is housed inside the mold 2, in particular in one of the two semi-molds, in a substantially facing position with respect to the flared second portion 12 of the feeding bush 8, coaxially with it.

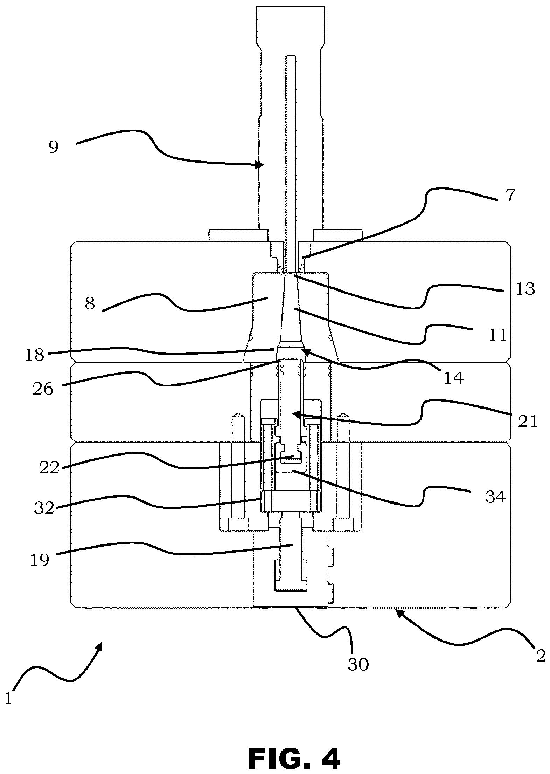

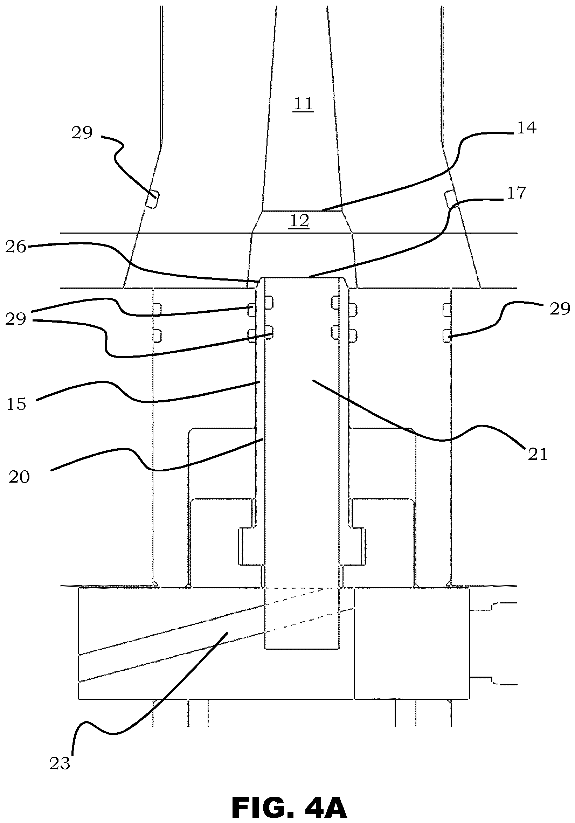

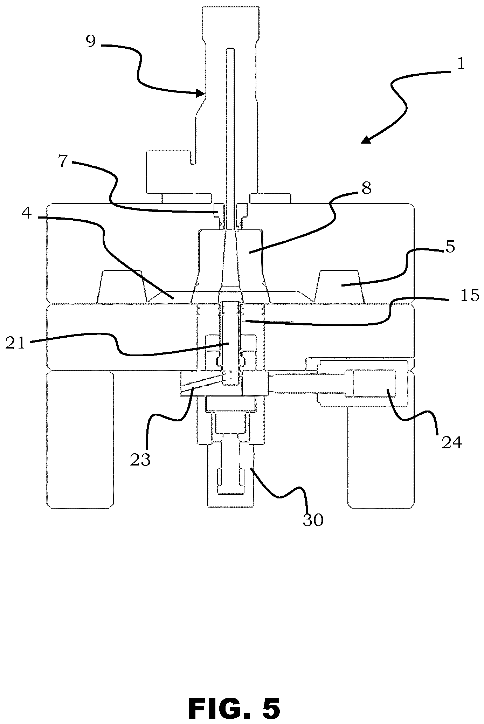

In this embodiment of the invention the shutter device 15 is conformed as a cylinder that is internally hollow along a longitudinal dimension thereof for internally housing a depressor piston 21. The shutter device 15 has a distal end 17 addressed towards the feeding and distribution channel 4, which has a peripheral bevel 26, clearly visible in the sections of figures 4, 4A and 5.

This shutter device 15 is movably guided by motorized means 30 from and towards the adduction portion 3, and, in particular, from and towards the feeding bush 8, in such a way as to lock and seal the fluid path of the section of feeding duct formed by the holes 10, 11 and 12 facing the feeding and distribution channel 4 downstream of the feeding bush 8.

The flared second portion 12 of the bush 8, in correspondence of its own larger diameter 14, has a corresponding inner-wall inclination in same shape coupling with the peripheral bevel 26 of the shutter device 15.

The shutter device 15 is activated approaching and moving away with respect to the feeding bush 8 by an actuator device 24 that, in this case, always in a non-limiting manner, is arranged with a cavity 32 that allows the insertion of a carriage mechanism 34 that controls the movement of the depressor 21 independently.

In contrast closure condition, there is the shape coupling between peripheral bevel 26 and inner wall 18 of the flared second portion 12, and a consequent interruption of fluid communication and seal between flared second portion 12 of the feeding bush 8 and the feeding and distribution channel 4. The shutter device 15 and the feeding bush 8 are preferably made of a different material, in particular the material of the shutter device 15 being harder than the material of the feeding bush 8.

It is understood that for all the considerations of the case, the feeding bush 8 can coincide with the adduction bush 7 according to the need to arrange the apparatus 1.

As already mentioned, the shutter device 15, in the hollow cylinder shape, houses in the inner cavity 20 thereof a depressor piston 21 movable along the shutter device 15. The depressor piston 21 in correspondence of a proximal end 22 opposite to the feeding and distribution channel 4 slides along a specific carriage 34 with inclined slide 23 to obtain the longitudinal movement along the inner cavity 20.

The movement of the carriage 34 with inclined slide 23 with respect to the depressor piston 21 is obtained by means of an actuator 24.

In a preferred embodiment coupling bush 7, feeding bush 8, shutter device 15 and depressor piston 21 are assembled in the respective seats using seals 29 adapted to resist to high temperatures, for example Teflon or FKM-Viton seals or gaskets that resist even up to 200°C.

The shutter device 15 with depressor piston 21, in a particular version thereof with fixed depressor piston 21, can be advantageously used, other than for HPRTM processes, also for reaction molding processes with expanding resins. In this hypothesis, the shutter device 15 can be installed no more coaxially to the adduction portion 3, but in correspondence of the feeding and distribution channel 4.

Basically, in this case the shutter device with relative depressor piston can be provided for separating the adduction area from the feeding area and therefore from the rest of the mold, since the pressure inside the cavity of the mold will be generated by the expanding material itself, subsequently to the end of the injection, that is, to the removal of the mixing and dosing head.

In particular, the devise of the present invention can be exploited with expanding resins to leave space to the expansion of the residue material in the adduction portion, with the shutter device installed in a coaxial position with respect to the mixing and dosing head.

In fact, the problem of not having to leave the head housed in the adduction bush for all the reaction and polymerization time is felt for both the types of industrial process in all those cases in which the cavity of the mold must be kept in pressure conditions different from the atmospheric pressure.

An alternative embodiment is described below in which at least two or more feeding and distribution channels 4, represented in figures 9, 10 and 11, and a shutter device 15 on each feeding and distribution channel 4 are provided.

These shutter devices 15 constitute, basically, the valve means 6 described previously with reference to the relative housing holes 16 provided in the mold 2 for the casting selection.

In correspondence of each shutter device 15 a corresponding closing bush 25 is arranged in a position facing the shutter device with respect to the feeding and distribution channel 4. The closing bushes 25 have a recess 27 in correspondence of the feeding and distribution channel that is likely to shape couple with the peripheral bevel 26 of the shutter device 15 as with the previous embodiment.

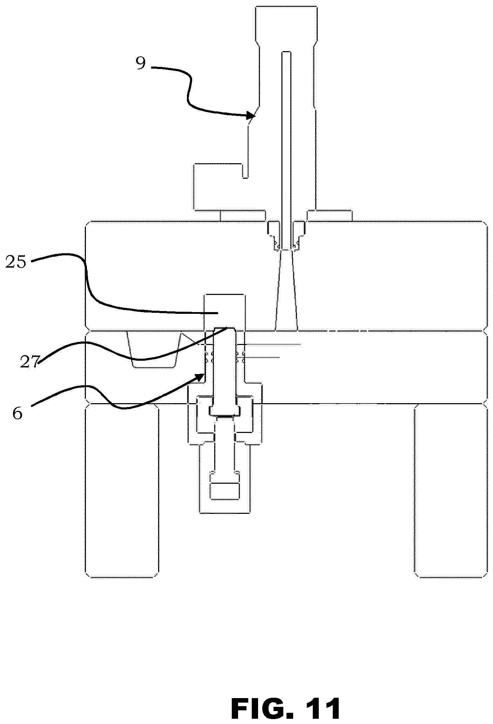

In this embodiment the shutter devices can be conformed as a full cylinder, as represented, for example, in figure 11.

Now, with particular reference to figures from 4 to 7, which represent a schematic view of the apparatus for reaction and injection molding of reagent resins according to an exemplary non-limiting embodiment, the injection molding process is described according to the invention.

The operative end of the mixing and dosing head under high pressure 9 is inserted in the adduction portion 3. In the present embodiment, in particular, the mixing and dosing head under high pressure 9 has an operative end containing the supply chamber in which a conventional closure and expulsion valve element of the mixture of reagent resins slides and that is inserted in the hole 10 of the coupling bush 7. The mixture of fluid reagent resins is introduced through the adduction fluid path and the canalization represented by the coaxial holes 10, 11 and 12 of the bushes 7 and 8 and flows through the flared second portion 12 of the feeding bush 8 inside the feeding and distribution channel 4, through which it flows inside the forming area 5.

The end of the injection phase is determined according to modalities known in the dosing technique of the reagent resins or by means of reaching a pre-determined pressure detected by means of a pressure sensor. At the end of the introduction of the mixture of reagent resins, the shutter device 19 activated by the motorized means 30 shape couples the shutter device 15 with the feeding bush 8, in particular the peripheral bevel 26 with the inner wall 18 of the flared second portion 12. The fluid communication between the flared second portion 12 and the feeding and distribution channel 4 is therefore interrupted and sealed. At this point, the actuator 24 makes the carriage 34 with inclined slide 23 slide, inducing the movement of the depressor piston 21 away from said adduction channel 11 and 12. In such a manner, the pressure inside the volume comprised between depressor piston 21 and the flared second portion 12 diminishes abruptly and it is possible to separate and extract the mixing and dosing head 9 from the mold 2 without problems, avoiding the exit of residues of mixture of fluid reagent resin thrust by the pressure and avoiding that resin leaks from the end of the head in the reaction phase along the path towards the subsequent mold. The resin in course of thermosetting along the adduction fluid path can be left to harden and be removed at the opening of the mold, extracting a conical core.

In particular, when the resin is solidified and, having passed the adequate polymerization time, the shutter can be lowered and therefore the mold can be opened. Subsequently, the depressor can be moved by lifting it or depressor and shutter can be both moved with subsequent movements with the mold open, thus extracting the solidified resin that has formed a solid core and expelling the residues of resin partially adhered to the cylindrical volume that has allowed the depressurization and the suction.

Basically, the possibility is thus obtained of disengaging and removing the head without staining the mold and of adequately cleaning the hole of the coupling bush 7 and of the feeding duct.

The movement according to modalities controlled in sequence or synchronized of the depressor piston 21 and of the shutter 15, the consequent said negative pressure avoids, therefore, that the leaking or quickly consolidating material remains solidified in all the volume of the flared first portion 11 or stratifies in correspondence of the flared second portion 12, and, above all, that it remains or stratifies reacted material in the duct portion 10 that, with the repeated use of this process, would obstacle the repeated introduction of the end of the operative head of the mixing and dosing head.

Further, if, in the case of the mixtures of compact thermosetting reagent resins it is possible to determine the end of the introduction of material adopting without distinction the techniques described above, in the case of the expanded thermosetting resins such end is identified only by means of reaching the desired casting weight.

In both cases, anyway, it is possible to remove the mixing and dosing head 9 from the mold 2 without having to wait for the required reaction time.

In the case of the alternative embodiment represented in figures from 9 to 11 described above, the process described is bound to a preventive selection phase. In fact, the locking by means of the activation of the respective shutter of a branch of feeding and distribution channel 4, or of a series of feeding and distribution channels 4, can occur in a plurality of modalities, of the sequential or contemporaneous type, on the basis of the specific characteristics of the material that has to flow and of the specific filling process of the cavity of the mold required, variable on a case by case basis.

In this case, the shutter device, for production easiness reasons, in some cases, as can be seen in figure 11, can be conformed as a full cylinder.

The present invention solves the technical problem and has several advantages, the first one is surely that it is possible to produce manufacturing in parallel on more than one mold 2 under pressure adopting a unique mixing and dosing head 9 under high pressure, without waiting the various polymerization times. This allows to increase significantly the efficiency of the whole reaction molding process.

Advantageously, further, the invention avoids the staining or locking of the adduction portion 3 of the mold even if it is used in a continuous manner, without periodic human intervention.

A further advantage is also represented by the fact that the safety of the operation is guaranteed, a clue point given the high pressures at stake and the temperature of the reagent resins.

Another advantage is that of allowing a functioning that is adaptable to the cases in which one or a plurality of forming tanks 5 inside the same mold 2 is provided.

A further advantage is given by the fact that it is possible to adopt the same apparatus 1 both for compact thermosetting reagent resins and for expanded thermosetting resins.

Last, a further advantage is given by the optimization in economic terms of the production connected with the optimization of production times.

To the system of the present invention the skilled in the art will clearly be able to devise further modifications and variants, all comprised in the scope of protection as defined by the following claims.

## Claims

1. Improved apparatus (1) for reaction and injection molding comprising at least one high pressure mixing and dosing head (9) for a mixture of thermosetting resins and a mold, said mold having:
- at least one adduction portion (3) to be coupled with an operating end of the mixing and dosing head (9),
- at least one feeding and distribution channel (4) and at least one forming area (5) in fluid communication with each other and with the adduction portion, further comprising a shutter device (15) that is active between said adduction portion (3) and said feeding and distribution channel (4), or in said channel,
**characterized in that** the shutter device (15) is configured to allow decoupling said mixing and dosing head (9) from said adduction portion (3) immediately at the end of the introduction phase of said mixture of thermosetting resins under pressure, wherein said shutter device (15) is a hollow cylinder having an end that is movably guided towards said adduction portion (3) and inside which a depressor piston is movable (21).

2. Apparatus for reaction molding according to claim 1, wherein said adduction portion (3) comprises a coupling bush (7) for connecting said operating end of the mixing and dosing head by means of a through-hole (10) and a coaxial feeding bush (8) receiving said end of said shutter device (15) at an opposite end.

3. Apparatus for molding according to claim 1, wherein said adduction portion (3) has a flared through-hole (12) to be shape coupled with a peripheral bevel (26) of said shutter device (15).

4. Apparatus for molding according to any one of the previous claims, wherein said hollow-cylinder shutter device is coaxial to the coupling bush (7) of said adduction portion (3).

5. Apparatus for molding according to claim 3, wherein said distal end of said shutter device has a peripheral bevel (26) and said opposite end of said feeding bush (8) has a corresponding inner surface of said flared through-hole with an inner-wall inclination in shape coupling with said peripheral bevel (26).

6. Apparatus for molding according to claim 1, wherein said hollow cylinder of said shutter device houses a depressor piston (21) that is movable along the cavities (20) of the cylinder interlocked to a negative pressure actuator (19).

7. Apparatus for molding according to claim 1, wherein said shutter device (15) is made of a harder material than the material which the hole surface (12) is made of and with which it couples in said adduction portion (3).

8. Reaction and injection molding process, wherein at least one high pressure mixing and dosing head (9) for a thermosetting reagent resin and a mold are provided, said mold having:
- at least one adduction portion (3) to be coupled with an operating end of the mixing and dosing head (9),
- at least one feeding and distribution channel (4) and at least one forming area (5) in fluid communication with each other and with the adduction portion (3);
said process comprising the following phases in that order:
- coupling the operating end of said mixing and dosing head with said adduction portion (3);
- introducing a thermosetting reagent resin into the mold (2) until the injection phase has been completed;
- intercepting the fluid path between said adduction portion (3) and said mold immediately at the end of the introduction of said mixture of thermosetting reagent resins and by means of a shutter device (15);
- depressurization and backwash of residues of the mixture of thermosetting resins by means of a depressor device inserted in the shutter device (15);
- removing said mixing and dosing head, wherein the interception and negative pressure phases are actuated by means of said shutter device (15) comprising a hollow cylinder having an end (17) that is movably guided towards said adduction portion (3) and inside which a depressor piston is movable (21).

9. Molding process according to claim 8, wherein the introduction of the mixture of resins into said feeding channel is stopped by a shape coupling between said shutter device (15) and said adduction portion (3), or in the fluid path of said at least one feeding and distribution channel, and wherein said depressor piston (21) is activated in sequence to create a suction negative pressure of residues of the thermosetting reagent resins.

10. Molding process according to claim 8, wherein the activation of the negative pressure phase occurs slightly earlier than the interception phase of the fluid path of the adduction portion (3).

## Patentansprüche

1. Verbesserte Vorrichtung (1) zum Reaktions- und Spritzgießen, die mindestens einen Hochdruckmisch- und Dosierkopf (9) für ein Gemisch aus wärmehärtenden Harzen und eine Form umfasst, wobei die Form Folgendes aufweist:
- mindestens einen Anführungsabschnitt (3), der mit einem Betriebsende des Misch- und Dosierkopfes (9) gekoppelt ist,
- mindestens einen Zufuhr- und Verteilungskanal (4) und mindestens einen Formungsbereich (5) in Fluidverbindung miteinander und mit dem Anführungsabschnitt,
weiter umfassend eine Schließvorrichtung (15), die zwischen dem Anführungsabschnitt (3) und dem Zufuhr- und Verteilungskanal (4) oder in dem Kanal aktiv ist,
**dadurch gekennzeichnet, dass** die Schließvorrichtung (15) dazu ausgebildet ist, Entkoppeln des Misch- und Dosierkopfes (9) von dem Anführungsabschnitt (3) unmittelbar am Ende der Einleitungsphase des Gemisches aus wärmehärtenden Harzen unter Druck zu gestatten, wobei die Schließvorrichtung (15) ein Hohlzylinder ist, der ein Ende aufweist, das beweglich zu dem Anführungsabschnitt (3) geführt ist und innerhalb dessen ein Entspannungskolben beweglich ist (21).

2. Vorrichtung zum Reaktionsgießen nach Anspruch 1, wobei der Anführungsabschnitt (3) eine Kopplungsbuchse (7) zum Verbinden des Betriebsendes des Misch- und Dosierkopfes mittels einer Durchgangsbohrung (10) mit einer koaxialen Zufuhrbuchse (8), die das Ende der Schließvorrichtung (15) an einem gegenüberliegenden Ende aufnimmt, umfasst.

3. Vorrichtung zum Gießen nach Anspruch 1, wobei der Anführungsabschnitt (3) eine aufgeweitete Durchgangsbohrung (12) aufweist, die mit einer umlaufenden Schrägung (26) der Schließvorrichtung (15) formgekoppelt wird.

4. Vorrichtung zum Gießen nach einem der vorstehenden Ansprüche, wobei die Hohlzylinder-Schließvorrichtung koaxial zu der Kopplungsbuchse (7) des Anführungsabschnitts (3) ist.

5. Vorrichtung zum Gießen nach Anspruch 3, wobei das distale Ende der Schließvorrichtung eine umlaufende Schrägung (26) aufweist und das gegenüberliegende Ende der Zufuhrbuchse (8) eine entsprechende Innenoberfläche der aufgeweiteten Durchgangsbohrung mit einer Innenwandneigung in Formkopplung mit der umlaufenden Schrägung (26) aufweist.

6. Vorrichtung zum Gießen nach Anspruch 1, wobei der Hohlzylinder der Schließvorrichtung einen Entspannungskolben (21) aufnimmt, der entlang der Hohlräume (20) des Zylinders beweglich ist, der mit einem Unterdruckaktuator (19) ineinandergreift.

7. Vorrichtung zum Gießen nach Anspruch 1, wobei die Schließvorrichtung (15) aus einem härteren Material hergestellt ist als dem Material, aus dem die Bohrungsoberfläche (12) hergestellt ist und mit dem es in dem Anführungsabschnitt (3) gekoppelt ist.

8. Reaktions- und Spritzgießprozess, wobei mindestens ein Hochdruckmisch- und Dosierkopf (9) für ein wärmehärtendes Reagenzharz und eine Form bereitgestellt sind, wobei die Form Folgendes aufweist:
- mindestens einen Anführungsabschnitt (3), der mit einem Betriebsende des Misch- und Dosierkopfes (9) gekoppelt wird,
- mindestens einen Zufuhr- und Verteilungskanal (4) und mindestens einen Formungsbereich (5) in Fluidverbindung miteinander und mit dem Anführungsabschnitt (3);
wobei der Prozess die folgenden Phasen in dieser Reihenfolge umfasst:
- Koppeln des Betriebsendes des Misch- und Dosierkopfes mit dem Anführungsabschnitt (3);
- Einleiten eines wärmehärtenden Reagenzharzes in die Form (2), bis die Einspritzphase abgeschlossen wurde;
- Unterbrechen des Fluidpfads zwischen dem Anführungsabschnitt (3) und der Form unmittelbar am Ende der Einleitung des Gemisches aus wärmehärtenden Reagenzharzen und mittels einer Schließvorrichtung (15);
- Entspannung und Rückstrom von Resten des Gemisches aus wärmehärtenden Harzen mittels einer Entspannungsvorrichtung, die in der Schließvorrichtung (15) eingesetzt ist;
- Entfernen des Misch- und Dosierkopfes, wobei die Unterbrechungs- und Unterdruckphasen mittels der Schließvorrichtung (15) betätigt werden, die einen Hohlzylinder umfasst, der ein Ende (17) aufweist, das beweglich zu dem Anführungsabschnitt (3) geführt ist und innerhalb dessen ein Entspannungskolben beweglich ist (21).

9. Gießprozess nach Anspruch 8, wobei das Einleiten des Gemisches aus Harzen in den Zufuhrkanal durch eine Formkopplung zwischen der Schließvorrichtung (15) und dem Anführungsabschnitt (3) oder in dem Fluidpfad des mindestens einen Zufuhr- und Verteilungskanals gestoppt wird und wobei der Entspannungskolben (21) nachfolgend aktiviert wird, um einen Ansaugunterdruck von Resten der wärmehärtenden Reagenzharze zu erzeugen.

10. Gießprozess nach Anspruch 8, wobei die Aktivierung der Unterdruckphase knapp früher als die Unterbrechungsphase des Fluidpfades des Anführungsabschnitts (3) stattfindet.

## Revendications

1. Appareil amélioré (1) pour moulage par réaction et injection comprenant au moins une tête de dosage et de mélange haute-pression (9) pour un mélange de résines thermodurcissables et un moule, ledit moule comportant :
- au moins une partie d'adduction (3) destinée à être couplée à une extrémité d'actionnement de la tête de dosage et de mélange (9),
- au moins un canal de distribution et d'acheminement (4) et au moins une zone de formation (5) en communication fluidique l'un avec l'autre et avec la partie d'adduction, comprenant en outre un dispositif obturateur (15) qui est actif entre ladite partie d'adduction (3) et ledit canal de distribution et d'acheminement (4), ou dans ledit canal,
**caractérisé en ce que** le dispositif obturateur (15) est configuré pour permettre le découplage de ladite tête de dosage et de mélange (9) de ladite partie d'adduction (3) immédiatement à la fin de la phase d'introduction dudit mélange de résines thermodurcissables sous pression, dans lequel ledit dispositif obturateur (15) est un cylindre creux présentant une extrémité qui est guidée de manière mobile vers ladite partie d'adduction (3) et à l'intérieur de laquelle un piston de dépression est mobile (21).

2. Appareil pour moulage par réaction selon la revendication 1, dans lequel ladite partie d'adduction (3) comprend un manchon de couplage (7) pour raccorder ladite extrémité d'actionnement de la tête de dosage et de mélange à l'aide d'un trou traversant (10) et un manchon d'acheminement coaxial (8) recevant ladite extrémité dudit dispositif obturateur (15) à une extrémité opposée.

3. Appareil pour moulage selon la revendication 1, dans lequel ladite partie d'adduction (3) comporte un trou traversant évasé (12) destiné à être couplé en forme à un biseau périphérique (26) dudit dispositif obturateur (15).

4. Appareil pour moulage selon l'une quelconque des revendications précédentes, dans lequel ledit dispositif obturateur en cylindre creux est coaxial au manchon de couplage (7) de ladite partie d'adduction (3).

5. Appareil pour moulage selon la revendication 3, dans lequel ladite extrémité distale dudit dispositif obturateur comporte un biseau périphérique (26) et ladite extrémité opposée dudit manchon d'acheminement (8) comporte une surface intérieure correspondante dudit trou traversant évasé présentant une inclinaison de paroi intérieure se couplant en forme audit biseau périphérique (26) .

6. Appareil pour moulage selon la revendication 1, dans lequel ledit cylindre creux dudit dispositif obturateur loge un piston de dépression (21) qui est mobile le long des cavités (20) du cylindre interverrouillé avec un actionneur à pression négative (19).

7. Appareil pour moulage selon la revendication 1, dans lequel ledit dispositif obturateur (15) est composé d'un matériau plus dur que le matériau dont est composée la surface de trou (12) et avec lequel il se couple dans ladite partie d'adduction (3).

8. Processus de moulage par réaction et par injection, dans lequel au moins une tête de dosage et de mélange haute-pression (9) pour une résine réactive thermodurcissable et un moule sont prévus, ledit moule comportant :
- au moins une partie d'adduction (3) destinée à être couplée à une extrémité d'actionnement de la tête de dosage et de mélange (9),
- au moins un canal de distribution et d'acheminement (4) et au moins une zone de formation (5) en communication fluidique l'un avec l'autre et avec la partie d'adduction (3),
ledit processus comprenant les phases suivantes dans cet ordre :
- le couplage de l'extrémité d'actionnement de ladite tête de dosage et de mélange avec ladite partie d'adduction (3),
- l'introduction d'une résine réactive thermodurcissable dans le moule (2) jusqu'à ce que la phase d'injection soit terminée,
- l'interception du chemin de fluide entre ladite partie d'adduction (3) et ledit moule immédiatement à la fin de l'introduction dudit mélange de résines réactives thermodurcissables et à l'aide d'un dispositif obturateur (15),
- la dépressurisation et le lavage à contre-courant de résidus du mélange de résines thermodurcissables à l'aide d'un dispositif de dépression inséré dans le dispositif obturateur (15),
- le retrait de ladite tête de dosage et de mélange, dans lequel les phases de pression négative et d'interception sont actionnées à l'aide dudit dispositif obturateur (15) comprenant un cylindre creux comportant une extrémité (17) qui est guidée de manière mobile vers ladite partie d'adduction (3) et à l'intérieur de laquelle un piston de dépression est mobile (21).

9. Processus de moulage selon la revendication 8, dans lequel l'introduction du mélange de résines dans ledit canal d'acheminement, est arrêtée par un couplage en forme entre ledit dispositif obturateur (15) et ladite partie d'adduction (3), ou dans le chemin de fluide dudit au moins un canal de distribution et d'acheminement, et dans lequel ledit piston de dépression (21) est activé de manière séquentielle pour créer une pression négative d'aspiration de résidus des résines réactives thermodurcissables.

10. Processus de moulage selon la revendication 8, dans lequel l'activation de la phase de pression négative survient légèrement plus tôt que la phase d'interception du chemin de fluide de la partie d'adduction (3).
